# EUROPEAN PATENT SPECIFICATION

(11) **EP 0 326 253 B1**
(45) Date of publication and mention of the grant of the patent: **13.10.1993**
(21) Application number: 89300312.9
(22) Date of filing: 13.01.1989
(51) Int. Cl.: A23L 1/10

(54) **Cereal composite**
Getreidezusammensetzung
Composition de céréales

(30) Priority: 14.01.1988 GB 8800788; 31.05.1988 GB 8812896
(43) Date of publication of application: 02.08.1989
(73) Proprietor: A.G. (PATENTS) LIMITED, London, W1N 4BB (GB)
(72) Inventor: Burdett, Jhon Robert, Northwood,Middlesex (GB); Hagyard, Christopher James, Shropshire (GB)
(74) Representative: Matthews, Derek Peter

(56) References cited:
- US-A- 2 127 782
- US-A- 3 790 690

## Description

This invention relates to an improved cereal composite material and more particularly to an oat-based composite suitable for use in meat products, especially low fat meat products.

Sausages and similar meat products usually contain additives which assist water retention both before and after cooking in order to provide a texture acceptable to the consumer. Indeed the fat content of the meat product also assists in providing a suitably soft texture. It has however been found necessary to incorporate inter alia relatively large amounts of ancillary ingredients such as phosphates to enhance water retention.

In recent years, consumer demand for low fat foods has led to attempts to reduce the fat content of such meat products but hitherto low fat sausages have had an excessively tough and rubbery texture. It is also now considered to be desirable to reduce the content of 'unnatural' substances such as phosphates but this is difficult to achieve without adversely affecting texture.

The other component in traditional sausages having a water-retaining effect is so-called rusk which also serves as a binder. This is a wheat based pre-cooked granular material having a relatively porous structure. However, it is not practical to increase the proportion of rusk in sausages and like meat products in order to improve water retention since this would disturb the essential ingredients matrix.

We have now investigated the possibility of fully or partially replacing the wheat based rusk in sausages by a composite oat-containing material. We have found that a particular combination of products, that is a composite material comprising rolled oats and at least one particular dried cereal product, possesses better water absorption characteristics as compared to rusk and results in an improved texture in the final product, particularly in low fat products.

According to one feature of the invention, therefore, we provide a cereal composite material comprising from 35 to 75% by weight of rolled oats in admixture with from 20 to 55% by weight of at least one particulate dried cereal product.

The particulate dried cereal product is preferably roller dried flake (an oat flour product described in more detail hereinafter) although other methods of drying and flaking/particulation may also be used to produce the dried cereal.

The composite comprises from 35% to 75%, preferably 40% to 75%, by weight of rolled oats and from 20% to 55% by weight of dried cereal product, for instance roller dried flake. More preferably, for standard recipe products, from 55% to 75% by weight of rolled oats and from 20% to 40% by weight of dried cereal product, and for low fat products from 40% to 60% of rolled oats and from 35% to 55% of dried cereal product. The composite may also contain conventional additives such as water binding agents (e.g. soya concentrates and phosphates) although as previously mentioned these are preferably minimised, starches (e.g. rice flour and potato flour) and emulsifiers (e.g. whey powder and soya isolates).

Roller dried flake as referred to herein comprises a mixture of milled oat flour (for example 60-85% e.g. about 70% by weight) together with smaller quantities of wheat flour (for example 10-40% e.g. about 25% by weight) and other flour (for example 3-10% e.g. about 5% by weight). The flours are normally slurried together in water although the other flours may be added at a later final blending stage. The resultant fluid paste of custard-like consistency is then fed into a conventional roller drier and steam heated to a temperature above the gelatinisation point of the starch in the respective flours; the gelatinised product is then removed from the roller, e.g. by a knife blade, and the relatively large flakes so obtained crushed to flakes about 5 to 10 mm across and about 0.1 to 1.0 mm thick.

Other methods of drying which can be used to produce dried cereal products suitable for use in the invention are fluidised bed drying, spray drying and also cooker extrusion followed by comminution of the extruded product, e.g. by cutting to form pellets which are subsequently ground. Dried cereal product may also be produced by baking or other conventional methods and then ground to formulate the particulate product.

Where the dried cereal product is intended to be cooker extruded, it may contain from 50 to 85% by weight of milled oat flour, from 10 to 50% by weight of wheat flour and up to 10% of other flour. Alternatively where the dried cereal product is intended to be cooker extruded it may contain from 20 to 50% by weight of rich flour which partially or completely replaces the wheat flour - the dried cereal product then comprises an oat flour/wheat flour/rice flour or oat flour/rice flour mixture. A further possibility is the incorporation of from 10 to 30% by weight of wheat starch partially (but not completely) replacing the wheat flour or rice flour to give oat flour/wheat starch/wheat flour and oat flour/wheat starch/rice flour mixes.

Rolled oats, on the other hand, are a well-known commercial product manufactured by dehusking and flattening uncooked oats e.g. to a thickness between 0.1 and 1.0 mm, preferably 0.3-0.5 mm, and to a size about 2 to 12 mm across; the resulting groats are normally subjected to steam baking to stabilise them, with control to avoid pre-gelatinisation.

The rolled oats and dried cereal product are then combined, if desired with addition of other components as discussed above. The process of drying a slurry to form a particulate cereal product and admixing said product with rolled oats to yield the cereal composite forms a further aspect of the invention.

The oat-based composite of the present invention has shown improved water absorption characteristics compared to conventional, wheat-based rusk, and these improved characteristics are believed to arise from the two-component nature of the material.

The oat based composites according to the invention provide the additional advantage of higher protein and fibre content as compared with conventional wheat based rusk.

At the time of mixing the components of sausages or similar meat products, it is important that the required amount of water is rapidly absorbed by the cereal based ingredient. However, it also important that on cooking, the cereal component does not lose its water retaining properties, thereby releasing the previously bound water which either produces an unacceptably wet product or evaporates to produce an unacceptably dry or rubbery product. We have found that using the oat based mixture according to the invention, preferably added to the blender/mixer/bowl chopper after the water has been added and has had time to interact with the meats and other ingredients, water is rapidly absorbed during the production of the uncooked meat product and, as compared with use of conventional wheat based rusk, water is better retained on cooking. It is possible that during initial mixing, the water is rapidly absorbed by the dried cereal product and gradually absorbed by the rolled oats. Upon cooking the dried cereal product will tend to release water, the majority of which will be absorbed by the starches actively present within the rolled oats. This combination is adjudged to be superior to conventional rusk, where more water is released during cooking.

These improved water-retention properties permit the overall content of water-retaining substances in the meat product to be reduced and/or permit the fat content to be lower. In particular, it is possible to produce low fat sausages of acceptable texture without increasing additive levels or increasing the overall cereal content. In particular, the texture of low-fat sausages produced with the cereal composite according to the invention is significantly better than that of previous low-fat sausages with none of the "rubberiness" referred to earlier.

The cereal composite according to the invention will be of use in a variety of meta products, for instance beefburgers, patés and sausage meat as well as sausages, and thus according to a further aspect of the invention we provide a meat product containing a cereal composite material as hereinbefore defined. The composite is of particular use, however, in sausages and especially low-fat sausages. The meat products according to the invention, especially sausages, preferably contain 1% to 25% by weight of the oat based cereal composite more preferably 2% to 16% by weight. Where the composite acording to the invention is the sole filler, the meat products will conveniently contain from 5% to 25% by weight of the composite, more preferably 8% to 16% by weight. It is, however, possible to include a mixture of the composite and conventional wheat based rusk in such meat products and under these conditions the percentage of the composite may be lower than 5% by weight.

The cereal composite according to the invention is also of use in other applications, for instance in the manufacture of meat dishes such as pies and gravies; in the manufacture of fish products such as fish cakes; and in coatings for food products, e.g. fish portions or vegetables. The composite may also be used as an extender or filler in fruit fillings, for instance in fruit pies, replacing the starch currently used. Additional uses include incorporation in extruded pasta products (particularly in the production of health-food pastas) and general use as a filler in quiches and stuffings and as an ingredient in cakes and biscuits.

The invention is illustrated by the following Examples. Wenger extruders are available from Wenger International Inc., Kansas City, Missouri, U.S.A.

### Example 1

Roller dried flake was prepared by slurrying 150 kg of milled oat flour and 64 kg of wheat flour in 360 kg of water at room temperature. The slurry was roller dried at 150°C with steam heating of the roller and removed from the roller by a conventional knife blade to give flakes of 5-10mm width and 0.1-1.0mm thickness.

Roller dried flake (90kg) was blended with conventional rolled oats (110kg) to give the oat rusk product, which was then blended with conventional sausage ingredients as set out below to give a sausage-type mix:

| | |
|---|---|
| Pork shoulder - 80VL | 130 kg |
| Water | 45 kg |
| Oat rusk | 20 kg |
| Seasoning (including salt) | 3.7 kg |

The meat is introduced into the bowl chopper and initially cut, following which the seasoning is added. Once mixed and dispersed the water is added and finally the oat rusk is added. Blending continues for one minute and the product is then transferred to a pressure filler and extruded into casings.

### Example 2

Extruded flake was prepared by mixing together 50kg milled oat flour and 50kg wheat flour, and then vacuum feeding the material into the infeed hopper of a Wenger X20 extruder.

The mix was then fed through the extruder's double conditioning cylinder, further ensuring consistency of blend and particle size.

The material was then passed into the extruder barrel, and cold water was injected into the chamber. The internal frictional forces generated by the high speed rotation of the extruder shaft were controlled to provide an operating heat of 75°C for restructuring the oat starches without damaging the overall properties of the material.

The material passed throughout the barrel, and was then extruded through the die. A twin-bladed knife was then applied to cut the material into pellets, and the resultant product was fed to cooling trays to complete the process.

Once cooled the pellets were ground to a bulk density of 0.35g/ml, and blended (18kg) with rolled oats (22kg) to provide an oat rusk composite. This was then blended with conventional sausage ingredients as listed below:

| | |
|---|---|
| Pork shoulder | 130kg |
| Water | 45kg |
| Composite (extruded flake and oats) | 20kg |
| Seasoning (Including salt) | 3.7kg |

Blending methods were identical to the previous example.

## Claims

1. A cereal composite material comprising from 35 to 75% by weight of rolled oats in admixture with from 20 to 55% by weight of at least one particulate dried cereal product.

2. A cereal composite as claimed in claim 1 wherein the particulate dried cereal product is produced by roller drying.

3. A cereal composite as claimed in claim 2 wherein the particulate dried cereal product is prepared from a mix comprising 60 to 85% by weight of oat flour and from 10 to 40% by weight of wheat flour slurried in water.

4. A cereal composite as claimed in claim 1 wherein the particulate dried cereal product is produced by cooker extrusion followed by comminution.

5. A process for the preparation of a cereal composite material as claimed in claim 1, comprising drying a slurry of one or more flours in water to yield a dried particulate cereal product and admixing said product with rolled oats.

6. A meat product containing a cereal composite material as claimed in any of claims 1 to 4.

## Patentansprüche

1. Getreide-Materialzusammensetzung, umfassend 35 bis 75 Gew.-% Haferflocken in Mischung mit 20 bis 55 Gew.-% zumindest eines teilchenförmigen getrockneten Getreideprodukts,

2. Getreide-Zusammensetzung gemäß Anspruch 1, worin das teilchenförmige getrocknete Getreideprodukt durch Walzentrocknung hergestellt wird,

3. Getreide-Zusammensetzung gemäß Anspruch 2, worin das teilchenförmige getrocknete Getreideprodukt aus einer Mischung hergestellt wird, die 60 bis 85 Gew.-% Hafermehl und 10 bis 40 Gew.-% Weizenmehl, aufgeschlämmt in Wasser, umfaßt.

4. Getreide-Zusammensetzung gemäß Anspruch 1, worin das teilchenförmige getrocknete Getreideprodukt durch Kochextrusion und anschließende Zerkleinerung hergestellt wird.

5. Verfahren zur Herstellung einer Getreide-Materialzusammensetzung gemäß Anspruch 1, umfassend das Trocknen einer Aufschlämmung eines oder mehrerer Mehle in Wasser zur Erzielung eines getrockneten teilchenförmigen Getreideprodukts und das Mischen dieses Produkts mit Haferflocken.

6. Fleischprodukt, enthaltend eine Getreide-Materialzusammensetzung gemäß einem der Ansprüche 1 bis 4.

## Revendications

1. Matériau composite à base de céréales, comprenant de 35 à 75% en poids de flocons d'avoine en mélange avec 20 à 55% en poids d'au moins un produit céréalier séché sous forme de particules.

2. Matériau composite à base de céréales selon la revendication 1, dans laquelle le produit céréalier séché sous forme de particules est produit par séchage au rouleau.

3. Matériau composite à base de céréales selon la revendication 2, dans laquelle le produit céréalier séché sous forme de particules est préparé à partir d'un mélange comprenant de 60 à 85% en poids de farine d'avoine et de 10 à 40% en poids de farine de blé, en suspension dans l'eau.

4. Matériau composite à base de céréales selon la revendication 1, dans laquelle le produit céréalier séché sous forme de particules est produit par extrusion-cuisson, suivie d'un broyage fin.

5. Procédé pour la préparation d'un matériau composite à base de céréales selon la revendication 1, comprenant le séchage d'une suspension d'une ou plusieurs farines dans l'eau pour obtenir un produit céréalier sous forme de particules et le mélange dudit produit avec des flocons d'avoine.

6. Produit alimentaire contenant un matériau composite à base de céréales selon l'une des revendications 1 à 4.
